# EUROPEAN PATENT SPECIFICATION

(11) **EP 1 238 861 B1**
(45) Date of publication and mention of the grant of the patent: **22.10.2003**
(21) Application number: 02003927.7
(22) Date of filing: 21.02.2002
(51) Int. Cl.: B60R 16/02

(54) **Vehicle door hinge harness**
Fahrzeugtürscharnierkabelbaum
Faisceau de cables d'une charnière de portière de véhicule

(30) Priority: 22.02.2001 JP 2001046859
(43) Date of publication of application: 11.09.2002
(73) Proprietor: Yazaki Corporation, Minato-ku, Tokyo 108-0073 (JP)
(72) Inventor: Hayashi, Michio, Yazaki Parts Co., Ltd., Hiroshima-shi, Hiroshima 734-0024 (JP)
(74) Representative: Grünecker, Kinkeldey, Stockmair & Schwanhäusser Anwaltssozietät

(56) References cited:
- DE-A- 4 122 541
- JP-U- 2 097 830
- US-A- 5 131 779
- US-A- 5 566 048
- US-A- 5 751 544
- PATENT ABSTRACTS OF JAPAN vol. 016, no. 567 (E-1296), 8 December 1992 (1992-12-08) & JP 04 218285 A (MAZDA MOTOR CORP), 7 August 1992 (1992-08-07)
- PATENT ABSTRACTS OF JAPAN vol. 017, no. 377 (M-1446), 15 July 1993 (1993-07-15) & JP 05 060455 A (TOSHIBA CORP), 9 March 1993 (1993-03-09)

## Description

### BACKGROUND OF THE INVENTION

### 1. Field of the invention

The present invention relates to a door hinge harness in which a circuit conductor is arranged by using a door hinge pivotally-supporting a door on a vehicle body.

### 2. Description of the Related Art

With the recent high-functionalization of a side door, trunk lid, rear door, and the like of a motor vehicle, various electric appliances such as an electric sideview mirror, sideview mirror wiper, door speaker, window rail regulator motor, auto-door lock mechanism, child safety mechanism of the door window, and door lamp are used.

As an example, a modularized door having wiring harnesses to be connected to these electric appliances is supplied to an automobile manufacturer. In this case, it is important how efficiently the wiring harnesses as the circuit conductors are assembled to the door for its modularization and how efficiently the modularized door is assembled to the vehicle body at the automobile manufacturer in its assembling process.

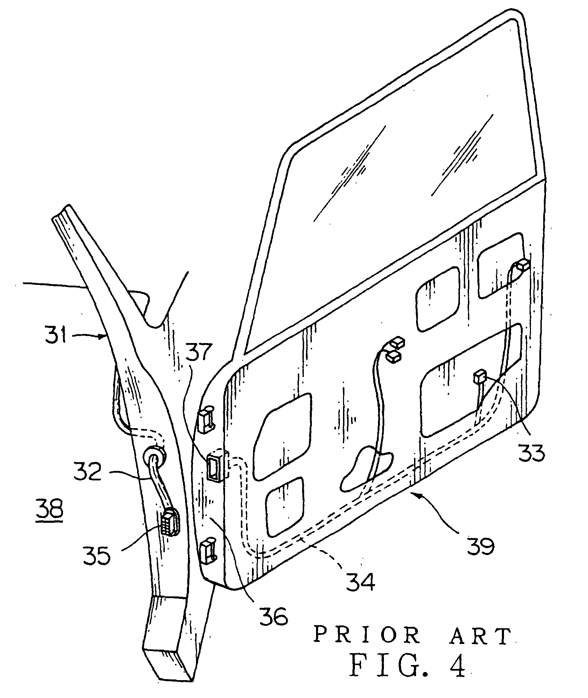

As shown in FIG.4, for supplying the current from a battery put in an engine room to the electric appliances equipped in the door, a body side wiring harness 32 led out from a front pillar 31 is electrically connected to a door side wiring harness 34 having terminal connectors 33 to be connected to the above electric appliances. The body side connector 35 provided on the end of the body side wiring harness 32 is connected to a connector 37 of the door side harness 34 at a side of a hinge side panel 36 of the door 39.

However, with the above structure in which the body side connector 35 and the door side connector 37 are merely connected to each other, even if the connectors 35,37 are installed inside the door inner space, the body side harness 32 or the door side harness 34 is exposed to the outside, i.e. to the rainwater, between the vehicle body 38 and the door 39. And, the harnesses are damaged due to frequent openings and closings of the door. And, the rainwater is likely to enter the damaged portion. Otherwise, there could be a danger of intentionally breaking the sheathing of the wire of the harness to short-circuit the electric circuit in order to release the door lock to steal the vehicle.

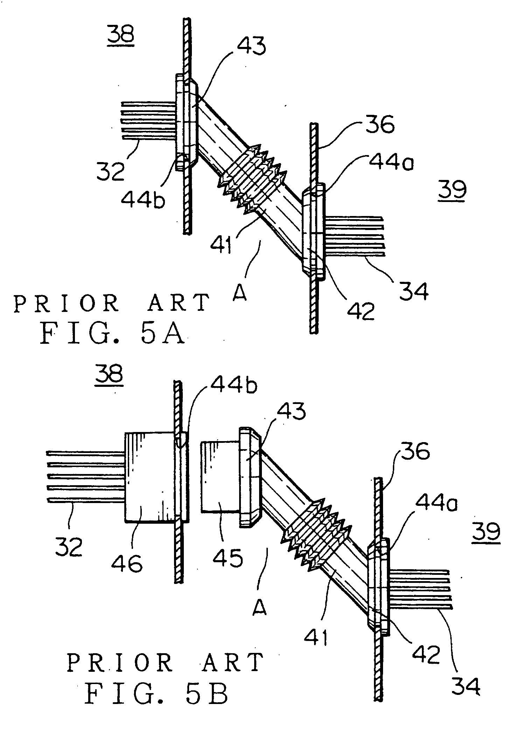

Therefore, as shown in FIG.5, a waterproofing structure with a grommet 41 made of synthetic resin is used at a transit portion A from the door 39 to the vehicle body 38.

In an embodiment of FIG.5A, flange portions 42,43 of the grommet 41 are pressed into a passing-through hole 44a formed on a hinge side panel 36 of the door and a passing-through hole 44b formed on a door encounter portion. And, a door harness side connector 45 provided inside the flange portion 43 of the grommet 41 is coupled with a body harness side connector 46 provided on the body side passing-through hole 44b.

With respect to the above prior art, however, the work to insert the connector 45 and the harness 34 into the grommet 41, while expanding the grommet 41, is troublesome, thereby deteriorating the productivity. And, the work to put the grommet 41 through the hole 44a of the door is also troublesome, and large force is required to make the flange portions 42,43 engage the holes 44a,44b, thereby deteriorating the assemblage of the wiring harness to the door and the vehicle body.

That is, when the door 39 is assembled to the vehicle body 38, the door body is firstly provisionally attached to the vehicle body 38 through a door hinge, and the connecting work of the harnesses at the transit portion between the vehicle body 38 and the door 39 has to be carried out in a narrow space between the vehicle body 38 and the door 39.

And, as the grommet 41 is likely to be damaged by a sharp tool or material such as wires, the electric circuit could be easily short-circuited by inserting a sharp tool into a gap between the door and the body to unlock the door to steal the vehicle.

A prior art harness arrangement structure according to the preamble of claim 1 (Japanese Utility Model Registration Application Laid-open No. 2-97830) using a door hinge for arranging the wiring harness is shown in FIG.6 In this structure a wiring harness 50 arranged between a vehicle body 38 and a door 39 is wound around a pin member 52 of a door hinge 51. This structure has a advantage of securely protecting the wiring harness from the outside without using the above grommet. However, the structure of the door hinge 51 is complicated, and the assembly of the wiring harness 50 to the door hinge 51 and the connecting work of the body side harness and the door side harness are difficult.

### SUMMARY OF THE INVENTION

In view of the foregoing, an object of the present invention is to provide a door hinge harness facilitating to easily arrange a wiring harness between the door and the vehicle body by using the door hinge and also enabling a body side harness (a circuit) and a door side harness (a circuit) to be easily and securely connected.

In order to achieve the above object, as a first aspect of the present invention, a door hinge harness provided between a vehicle body and a door of the vehicle body comprises: a door hinge to pivotally-supports a body side hinge portion and a door side hinge portion through an pin member for openably and closably attaching the door to the vehicle body; and a circuit conductor arranged through the door hinge for connecting a body side circuit to a door side circuit, wherein the pin member is tubularly formed, and the door hinge harness is arranged in an inner space of the pin member.

According to the above structure, the pin member is tubularly formed and the circuit conductor is arranged by using the inner space of the pin member so that the circuit conductor can be easily arranged on the door hinge. And, the door hinge harness having the circuit conductor can be easily assembled to the vehicle body.

And, since a grommet is not used, an attaching work of the grommet to the wiring harness can be removed, thereby improving productivity of the wiring harness. And, since an attaching work of the grommet to the door can be removed, an assembling workability of the wiring harness to a vehicle can be improved.

And, since the electric circuit could not be easily short-circuited intentionally by inserting a sharp tool into a gap between the door and the body to unlock the door, a vehicle theft can be prevented.

And, by using the modularized door hinge harness, even if the door assembly is carried to a vehicle assembly line for the assembly, the electric circuit can be easily arranged on the vehicle body only by attaching the body side hinge portion of the door hinge to the vehicle body. Therefore, the assembly workability of the electric circuit to the vehicle body is improved.

And, because the electric circuit is put through the inner space of the upper pin, the electric circuit is not caught in the body side hinge portion and the door side hinge portion, whereby a door opening or closing motion is not prevented.

As a second aspect of the present invention, based on the first aspect, an input side connector for a connector of the body side circuit and an output side connector for a connector of the door side circuit are provided on the circuit conductor arranged through the inner space of the pin member.

According to the above structure, the input side connector coupled to the body harness side connector, and the output side connector is coupled to the door harness side connector, thereby obtaining the electric connection. Like this, using the modularized door hinge harness, the door side harness and the body side harness can be easily and securely connected and modularization of the door can be facilitated.

As a third aspect of the present invention, based on the second aspect, the input side connector is attached to the body side hinge portion, and the output side connector is attached to the door side hinge portion.

According to the above structure, since the body side hinge portion is provided with the input side connector and the door side hinge portion is provided with the output side connector, the wiring harness can be easily assembled to the door only by attaching the door hinge to the door, thereby improving assembling workability.

As a fourth aspect of the present invention, based on the first aspect, a passing-through portion for passing the circuit conductor therethrough is provided on a periphery of the pin member.

According to the above structure, the circuit conductor is inserted into the passing-through portion of the pin member and stably positioned, thereby preventing the circuit conductor from being caught by the door hinge and therefore securely protecting the circuit conductor from a damage.

As a fifth aspect of the present invention, based on the first aspect, a passing-through portion for passing the circuit conductor therethrough is provided on each of the body side hinge portion and the door side hinge portion.

According to the above structure, since leading-out directions of the circuit conductor from the door hinge are limited, the circuit conductor is prevented from being caught by the door hinge and the arrangement of the circuit conductor around the door hinge can be simplified.

As a sixth aspect of the present invention, based on the second aspect, the body side hinge portion and the door side hinge portion have respective plate portions for attaching the input side connector and the output side connector, respectively.

According to the above structure, since positions of the input side and output side connectors securely determined by the respective plate portions, the connector connection with the door side harness and the body side harness is securely carried out.

As a seventh aspect of the present invention, based on the sixth aspect, the plate portions are provided with respective connector attaching holes to position, and to fix, the input side connector and the output side connector, respectively.

According to the above structure, since the connectors can be easily fixed to the plate portions by fitting with the connectors in the connector attaching holes of the plate portions, the connector assembling workability can be improved. And, since positions of the connectors can be more correctly limited, the connector connection of the connectors with the door side harness and the body side harness can be more securely carried out. And, since the connectors are received in attaching holes, the structure is downsized.

The above and other objects and features of the present invention will become more apparent from the following description taken in conjunction with the accompanying drawings.

### BRIEF DESCRIPTION OF THE DRAWINGS

FIG.1 is a perspective view showing an embodiment of the inventive door hinge harness;
FIG.2 is a side view showing a door hinge of the door hinge harness is installed between a vehicle body and a door;
FIG.3A is an enlarged perspective view showing a portion III of FIG.1;
FIG.3B is a perspective view showing an upper pin being a part of the door hinge;
FIG.3C is a perspective view showing a lower pin being a part of the door hinge;
FIG.4 is a perspective view showing a prior art harness arrangement structure;
FIG.5A is an explanatory illustration showing another prior art having a grommet at a transit portion between the vehicle body and the door, wherein the transit portion is directly connected by the grommet;
FIG.5B is an explanatory illustration showing a modified prior art of FIG.5A having a grommet, wherein a connector is used along with the grommet; and
FIG.6 is a perspective view showing still another prior art harness arrangement structure using a door hinge.

### DESCRIPTION OF THE PREFERRED EMBODIMENT(S)

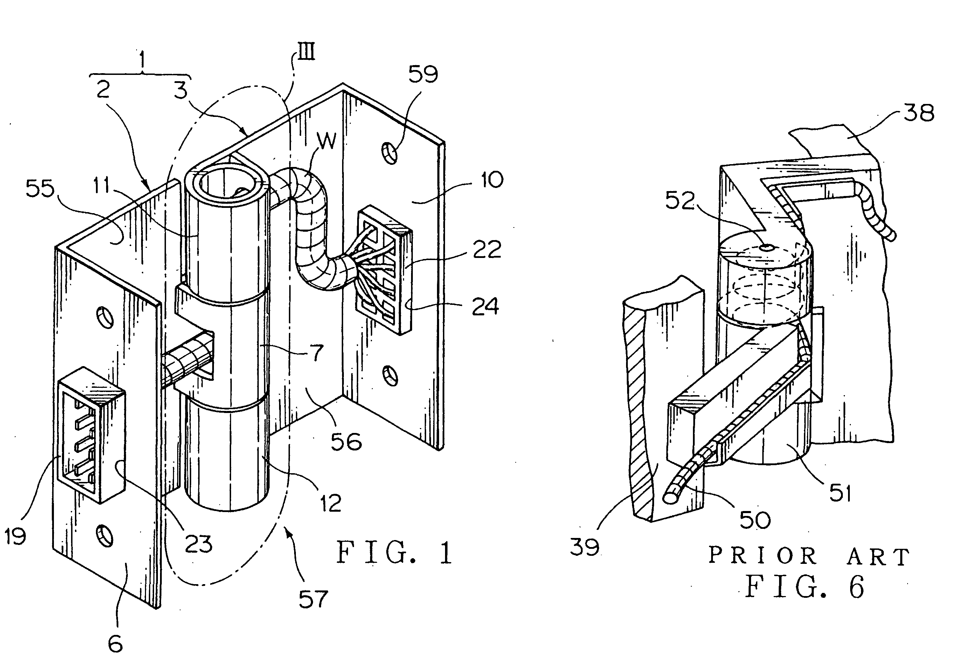

Embodiment(s) of the present invention will now be described in further detail with reference to FIGS. 1, 2, 3A, 3B, and 3C.

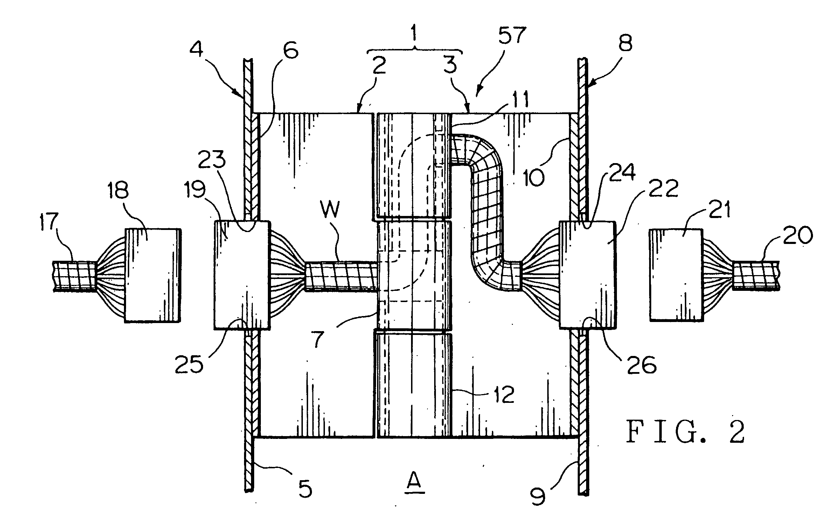

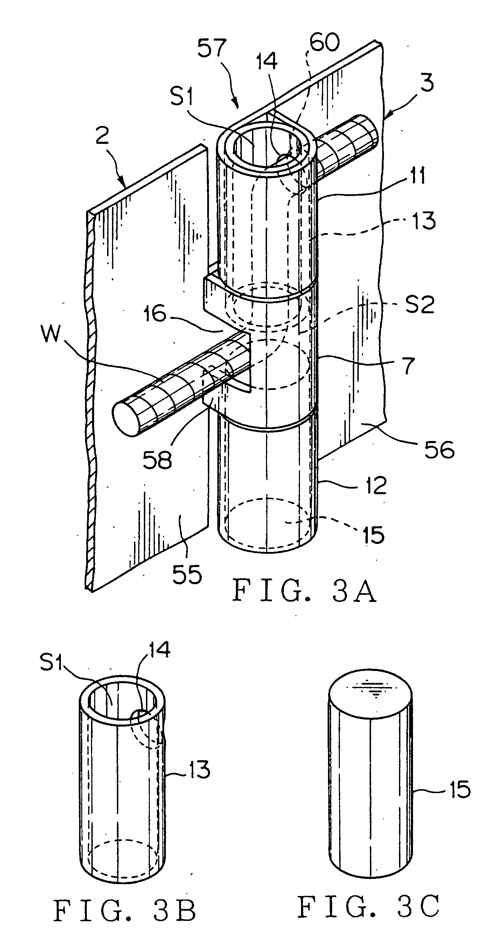

FIG. is a perspective view showing an embodiment of the inventive door hinge harness. FIG.2 is a side view showing a door hinge of the door hinge harness is installed between a vehicle body and a door. FIG.3A is an enlarged perspective view showing a portion III of FIG.1. FIG.3B is a perspective view showing an upper pin being a part of the door hinge. FIG.3C is a perspective view showing a lower pin being a part of the door hinge.

Reference 1 denotes a door hinge formed of metal sheet or the like, which door hinge consists of a body side hinge portion 2 and a door side hinge portion 3. The body side hinge portion 2 consists of a vertical plate portions (plate portions) 6,55 crossing orthogonally and a tubular portion 7 integrally continuing from a side end portion of one vertical plate portion 55 at its vertical-middle portion. The other vertical plate portion 6 confronts a door encounter portion 5 of a vehicle body 4 (FIG.2).

The cylinder portion 7 is formed by bending a portion of the vertical plate portion 55 inwardly as shown in FIG.3, while the ends of an up and down pair of connection pieces 58 perpendicularly abut the vertical plate portion 55. A rectangular harness passing-through hole (a passing-through opening) 16 as a harness passing-through portion is provided between the connection pieces. The passing-through hole 16 can be circular. The passing-through hole 16 can be easily formed on punching the vertical plate portion 55.

The door side hinge portion 3 (FIG.1) also consists of vertical plate portions (plate portions) 10,56 crossing orthogonally and tubular portions 11,12 continuing from the vertical plate portion 56 at respective upper and lower portions. The vertical plate portion 10 faces a hinge side panel 9 of a door 8 (FIG.2). The above tubular portion 7 is sandwiched between the upper and lower tubular portions 11,12. The tubular portions 11,12 are formed by bending respective up and down portions of the vertical plate portion 56 inwardly. Here, the tubular portions 7,11,12 may be separately formed and welded to the vertical plate portions *55,56.*

Inside the upper tubular portion 11, a tubular upper pin (a pin member) 13 (FIGS.3A,3B) is inserted. The bottom end portion of the upper pin downwardly projects from the tubular portion 11 and is fitted in the tubular portion 7 of the body side hinge portion 2. A passing-through hole 14 to pass a wiring harness W being a circuit conductor therethrough is provided on an upper portion of the upper pin 13. A passing-through hole 60 is also provided on the upper tubular portion 11 concentrically with the passing-through hole 14. The wiring harness W is made up of a plurality of wires bound up by a vinyl tape or vinyl tube.

A lower pin 15 (FIGS.3A,3B) of solid is attached to the lower tubular portion 12. The top end of the lower pin 15 is inserted into the tubular portion 7. The upper pin 13 and the lower pin 15 have the same longitudinal axis.

The door hinge harness 57 (FIG.1) is made by arranging the wiring harness W, i.e. the circuit conductor, on the door hinge 1. The harness W is introduced into an inner space S1 of the upper pin 13 from the passing-through hole 14 of the upper pin 13 through the passing-through hole 60 of the upper tubular portion 11, passes an air gap S2 between the upper pin 13 and the lower pin 15, and is led out to the outside through the passing-through hole 16 of the tubular portion 7.

As shown in FIGS.1,2, an input side female connector 19 is provided on the left end (the front end) of the harness W. A male connector 18 at the terminal of a body side harness (a circuit) 17 (FIG.2) of the power source side is coupled to the connector 19. And, on the right side end (the rear end) of the harness W, an output side female connector 22 for a male connector 21 of a door side harness (a circuit) 20 (FIG.2) is provided.

The female connectors 19,22 consist of female connector housings (references 19,22 being applied) made of synthetic resin, male terminals (not shown) accommodated in the connector housings, waterproofing packings provided inside the connector housings and fitting on the male connectors 18,21 (FIG.2), respectively. And, the male connectors 18,21 consist of male connector housings (references 18,21 being applied) made of synthetic resin and female terminals (not shown) accommodated in the connector housings, respectively. Between each wire of the wiring harnesses W,17,20 and terminal accommodating chambers, circular waterproofing rubber-stoppers may be inserted.

The input side connector 19 is fixed to a connector attaching hole 23 formed on the vertical plate portion 5 of the body side hinge portion 2. The output side connector 22 is fixed to a connector attaching hole 24 formed on the vertical plate portion 9 of the door side hinge portion 3. The connectors 19,22 can be easily fixed, for example, by engaging engaging projections (not shown) provided on the connector housings with the attaching holes 23,24.

Reference 25 of FIG.2 denotes a connector accommodation hole formed on the door encounter portion 5 of the vehicle body 4 for accommodating the input side connector 19. Reference 26 denotes another connector accommodation hole formed on the door hinge panel 9 for accommodating the output side connector 22.

Next, a method for assembling a door hinge harness 57 (FIG.1) with the above structure between the door encounter portion 5 of the vehicle body 4 and the door hinge panel 9 of the door 8 is described. First, a bolt (not shown) is inserted into an opening portion 59 of the door side hinge portion 3 of the door hinge 1 and screwed by a fixing means, such as a nut, to a predetermined portion of the door hinge panel 9 such that the output side connector 22 fits the connector accommodation hole 26.

Next, the door harness side connector 21 is connected to the output side connector 22. With this state, the input side connector 19 is fitted to the accommodating hole 25, and the body side hinge portion 2 is fixed to the door encounter portion 5 by a fixing means. Subsequently, the body harness side connector 18 is connected to the input side connector 19.

Here, the door hinge 1 can be fixed to the vehicle body 4 and the door 8 after having connected the connectors 18,19,21,22, because the wiring harnesses 17,20 each have some margin in length. When the door hinge 1 is fixed, the door hinge 1 is provisionally attached to the door 8 and the vehicle body 4 by hanging the connectors 19,22 on bottom ends of the accommodating holes 25,26 to facilitate the fixing work. Like this, the door 8 is attached to the vehicle body 4 completely, and the electric power from the battery can be supplied to the door side electric appliances through the wiring harness W.

In the present embodiment the harness W is arranged by using the inner space S 1 of the upper pin 13 of the door hinge 1, the input side connector 19 and the output side connector 22 are provided on respective ends of this harness W, and the body harness side connector 18 and the door harness side connector 21 are coupled to the respective connectors 19,22, whereby the electric connection can be easily and securely carried out.

Like this, an arrangement work of the harness W on the tubular portions 11,7 of the door hinge 1 can be easily carried out. And, an assembly work of the door hinge 1 with the harness W arranged therethrough to the vehicle body 4 or the door 8 can be easily carried out. Therefore, the modularization of the door 8 can be facilitated.

And, by using the modularized door hinge harness 57, even if the door assembly is carried to a vehicle assembly line for the assembly, the harness W can be easily arranged on the vehicle body 4 only by attaching the body side hinge portion 2 of the door hinge 1 to the vehicle body. Therefore, the assembly workability of the harness W to the vehicle body 4 is improved.

And, because the harness W is put through the inner space S1 of the upper pin 13, the harness W is not caught in the body side hinge portion 2 and the door side hinge portion 3, whereby a door opening or closing motion is not prevented.

And, because an elastic waterproofing grommet is not applied, an attaching process of the grommet can be removed, thereby improving easiness of the assembly of the wiring harness to the vehicle body. Because the electric circuit could not be easily short-circuited intentionally by inserting a sharp tool into a gap between the door and the body to unlock the door, a vehicle theft can be prevented.

And, because the attaching hole for the grommet on the vehicle body and the door are not necessary, a rainwater encroachment path from the outside can be reduced, thereby improving waterproofing property.

Though the inventive door hinge harness is applied to the side door of a motor vehicle in the above embodiment, the door hinge harness can be suitably applied to a rear door of a wagon, a trunk lid, a door of a cargo truck, a gal wing type door, and the like.

And, in the above embodiment, though the inner space S1 is formed in the upper pin 13, the harness W may be arranged in or through the inner space formed in the lower pin 15 being tubularly formed. And, a waterproofing means may be provided around the harness W and the connectors 19,22. And, the circuit conductor may be a film-like flat wires instead of the round wires.

And, though the door hinge harness 57 is arranged on the door 8 side in the above embodiment, the door 8 may be attached after the door hinge harness 57 has been assembled to the door encounter portion 5 of the vehicle body 4. And, slots may substitute for the harness passing-through holes 14,60 of the door side hinge portion 3. For example, if one of the passing-through holes is a circular hole and the other is a slot, a coming-out of the harness W from the tubular portions 11,13 is securely prevented.

Although the present invention has been fully described by way of examples with reference to the accompanying drawings, it is to be noted that various changes and modifications will be apparent to those skilled in the art.

## Claims

1. A door hinge harness provided between a vehicle body and a door of the vehicle body, comprising:
a door hinge (1) to pivotally support a body side hinge portion (2) and a door side hinge portion (3) through a pin member (13) for openably and closably attaching the door (8) to the vehicle body (4); and
a circuit conductor (w) arranged through the door hinge for connecting a body side circuit (17) to a door side circuit (20),
**characterised in that** the pin member (13) is tubularly formed, and the door hinge harness (w) is arranged in an inner space (S1) of the pin member (13).

2. The door hinge harness as set forth in claim 1, wherein
an input side connector (19) for a connector (18) of the body side circuit and an output side connector (22) for a connector (21) of the door side circuit are provided on the circuit conductor (w) arranged through the inner space (S1) of the pin member (13).

3. The door hinge harness as set forth in claim 2, wherein
the input side connector (19) is attached to the body side hinge portion (2), and the output side connector (22) is attached to the door side hinge portion (3).

4. The door hinge harness as set forth in claim 1, wherein
a passing-through portion (14) for passing the circuit conductor (w) therethrough is provided on a periphery of the pin member (13).

5. The door hinge harness as set forth in claim 1, wherein
a passing-through portion (16, 60) for passing the circuit conductor (w) therethrough is provided on each of the body side hinge portion (2) and the door side hinge portion (3).

6. The door hinge harness as set forth in claim 2, wherein
the body side hinge portion (2) and the door side hinge portion (3) have respective plate portions (6, 10) for attaching the input side connector (19) and the output side connector (22), respectively.

7. The door hinge harness as set forth in claim 6, wherein
the plate portions (6, 10) are provided with respective connector attaching holes (23, 24) to position, and to fix, the input side connector (19) and the output side connector (22), respectively.

## Patentansprüche

1. Fahrzeugtürscharnierkabelbaum, der sich zwischen einer Fahrzeugkarosserie und einer Fahrzeugtür der Karosserie befindet, umfassend:
ein Türscharnier (1), an dem eine mit der Karosserie verbundene Scharnierhälfte (2) und eine mit der Tür verbundene Scharnierhälfte (3) mittels eines Scharnierstiftes (13) drehbar befestigt sind, um die Fahrzeugtür (8) so an der Fahrzeugkarosserie anzubringen, dass sie geöffnet und geschlossen werden kann; und
ein elektrisches Kabel (w), das durch das Türschamier verlegt ist, um einen Schaltkreis in der Karosserie (17) mit einem Schaltkreis in der Tür (20) zu verbinden.
**dadurch gekennzeichnet, dass** der Scharnierstift (13) röhrenförmig ist und der Fahrzeugtürschamierkabelbaum sich im Innenraum (S1) des Schamierstiftes (13) befindet.

2. Fahrzeugtürscharnierkabelbaum nach Anspruch 1, wobei das elektrische Kabel (w), das durch den Innenraum (S1) des Schamierstiftes (13) verlegt ist, ein Eingangs-Verbindungsstück (19) zur Verbindung mit einem Verbindungsstück (18) des Karosserie-Schaltkreises, und ein Ausgangs-Verbindungsstück (22) zur Verbindung mit einem Verbindungsstück (21) des Tür-Schaltkreises aufweist.

3. Fahrzeugtürscharnierkabelbaum nach Anspruch 2, wobei das Eingangs-Verbindungsstück (19) an der mit der Karosserie verbundenen Scharnierhälfte (2) befestigt ist, und das Ausgangs-Verbindungsstück (22) an der mit der Tür verbundenen Scharnierhälfte (3) befestigt ist.

4. Fahrzeugtürscharnierkabelbaum nach Anspruch 1, wobei die Wandung des Scharnierstiftes (13) eine Durchgangsöffnung (14) zur Durchführung des elektrischen Kabels (w) aufweist.

5. Fahrzeugtürscharnierkabelbaum nach Anspruch 1, wobei die mit der Karosserie verbundene Scharnierhälfte (2) und die mit der Tür verbundene Scharnierhälfte (3) jeweils eine Durchgangsöffnung (16, 60) zur Durchführung des elektrischen Kabels (w) aufweisen.

6. Fahrzeugtürscharnierkabelbaum nach Anspruch 2, wobei die mit der Karosserie verbundene Scharnierhälfte (2) und die mit der Tür verbundene Schamierhälfte jeweils eine Platte (6, 10) zur Befestigung des Eingangs-Verbindungsstücks (19) bzw. des Ausgangs-Verbindungsstücks (22) aufweisen.

7. Fahrzeugtürscharnierkabelbaum nach Anspruch 6, wobei die Platten (6, 10) jeweils eine Verbindungsstückbefestigungsöffnung (23, 24) zur Anbringung und Befestigung des Eingangs-Verbindungsstücks (19) bzw. des Ausgangs-Verbindungsstücks (22) aufweisen.

## Revendications

1. Faisceau de câble à charnière de portière disposé entre une carrosserie de véhicule et une portière de la carrosserie de véhicule, comprenant :
une charnière de portière (1) destinée à supporter, pour pouvoir pivoter, une partie de charnière de côté de carrosserie (2) et une partie de charnière de côté de portière (3) par l'intermédiaire d'un élément de broche (13) pour assujettir, de manière à pouvoir l'ouvrir et la fermer, la portière (8) à la carrosserie de véhicule (4) ; et
un conducteur de circuits (W) agencé à travers la charnière de porte et destiné à connecter un circuit de côté de carrosserie (17) un circuit de côté de portière (20),
**caractérisé en ce que** l'élément de broche (13) est formé de façon tubulaire, le faisceau de câble à charnière (W) est agencé dans un espace intérieur (S1) de l'élément de broche (13).

2. Faisceau de câble à charnière de porte selon la revendication 1, dans lequel
un connecteur de côté d'entrée (19) pour un connecteur (18) du circuit de côté de carrosserie et un connecteur de côté de sortie (22) pour un connecteur (21) du circuit de côté de portière sont disposés sur le conducteur de circuits (W) agencé à travers l'espace intérieur (S1) de l'élément de broche (13).

3. Faisceau de câble à charnière de porte selon la revendication 2, dans lequel
le connecteur de côté d'entrée (19) est assujetti à la partie de charnière de côté de carrosserie (2), le connecteur de côté de sortie (22) étant assujetti à la partie de charnière de côté de portière (3).

4. Faisceau de câble à charnière de porte selon la revendication 1, dans lequel
une partie de passage traversant (14) destinée à faire passer, à travers elle, le conducteur de circuits (W) est disposée sur une périphérie de l'élément de broche (13).

5. Faisceau de câble à charnière de porte selon la revendication 1, dans lequel
une partie de passage traversant (16, 60) destinée à faire passer, à travers elle, le conducteur de circuits (W) est disposée sur chacune de la partie de charnière de côté de carrosserie (2) et de la partie de charnière de côté de portière (3).

6. Faisceau de câble à charnière de porte selon la revendication 2, dans lequel
la partie de charnière de côté de carrosserie (2) et la partie de charnière de côté de portière (3) comportent des parties plates respectives (6, 10) destinées à assujettir le connecteur de côté d'entrée (19) et le connecteur de côté de sortie (22), respectivement.

7. Faisceau de câble à charnière de porte selon la revendication 6, dans lequel
les parties plates (6, 10) comportent des orifices d'assujettissement de connecteurs respectifs (23, 24) destinés à positionner et à fixer le connecteur de côté d'entrée (19) et le connecteur de côté de sortie (22), respectivement.
